# EUROPEAN PATENT APPLICATION

(11) **EP 1 862 348 A1**
(43) Date of publication of application: **05.12.2007**
(21) Application number: 07010650.5
(22) Date of filing: 29.05.2007
(51) Int. Cl.: B60L 11/08, H02H 7/06, H02H 7/12

(54) **Motor control apparatus and on-vehicle motor drive system**

(30) Priority: 31.05.2006 JP 2006151563
(71) Applicant: Hitachi, Ltd., Chiyoda-ku Tokyo 100-8280 (JP)
(72) Inventor: Kunii, Keiji, Tokyo 100-8220 (JP); Suwa, Tokihito, Tokyo 100-8220 (JP); Shimizu, Hisaya, Tokyo 100-8220 (JP); Ohno, Satoru, Tokyo 100-8220 (JP)
(74) Representative: Beetz & Partner

(57) **Abstract**

The invention relates to a motor control apparatus and on-vehicle motor drive system which can easily protect components of an inverter 32 from overvoltage even if surplus power occurs in a generator 21 in a system without a battery between a generator and a motor.

The inverter 32 converts the DC power generated by a generator 21 to AC power, and supplies it to an AC motor 40. A controller 100 controls DC-to-AC conversion in the inverter 32. Interruption means including an overvoltage detector 36 and a semiconductor switch 38 prevents the power generated by the generator 21 from being supplied to the inverter 32 when the inverter 32 is stopped.

## Description

### BACKGROUND OF THE INVENTION

### 1. Field of the Invention

The present invention relates to a motor control apparatus and on-vehicle motor drive system. More particularly, the invention relates to a motor control apparatus and on-vehicle motor drive system preferably used for a generator-motor system which is driven by an engine like a generator for an automobile, wherein the power generated by a generator is directly consumed by an inverter and a motor without being stored in a battery.

### 2. Description of the Related Art

When a generator is driven by an engine and a motor is driven by the power generated by the generator, as is the case with a hybrid car, the generated power is normally charged in a battery (for example, refer to JP-A-8-340605 and JP-A-10-191503).

For reference, in the case of a winch or other cargo handling machinery using an induction motor operating on a commercial power supply as a driving source, it is known that the induction motor operates as a generator, the power generated by the generator is charged in a smoothing capacitor, and the power is discharged by a discharge resistor when lowering a cargo (for example, refer to JP-A-2001-268933).

### SUMMARY OF THE INVENTION

For simplification of system and cost reduction, a battery-less on-vehicle motor drive system without a battery between a generator and a motor has been in practical use. With such a battery-less on-vehicle motor drive system, the power generated by the generator is controlled so that all the power generated by the generator be supplied to and consumed by the motor.

Here, if the generated power is not equal to power consumption, i.e., a load of the motor, a difference between them will cause DC voltage fluctuation.

Normally, the generated power is controlled so that it equals the power consumption. The generated power can be controlled by the number of rotations and a field current of the generator. However, since the number of rotations is driven together with wheels by the engine, it cannot be changed while a vehicle is moving. Therefore, the generated power is controlled by the field current. However, a large inductance component causes power change involving a time constant of several tens to several hundreds milliseconds.

On the power consumption side, on the other hand, an inverter is used to vary the power to be supplied to the motor and this inverter can drive the motor with any desired voltage, frequency, and phase, allowing power change with almost no time delay.

As a result, a difference in change time between the generated power and the power consumption causes a problem of excessive or insufficient power. For example, if overcurrent or overtemperature is detected, the inverter is immediately stopped in order to protect the inverter and the motor, and the power consumption becomes zero when the inverter stops. However, since the generator continues to generate power during an attenuation period of the field current as mentioned above, surplus power occurs. With this surplus power, if the DC voltage which is the output of the generator is increased, a semiconductor, the smoothing capacitor, or another component of the inverter may be damaged by the overvoltage.

To cope with this problem, it would be possible to use a component with a high withstand voltage. However, this method increases loss of semiconductor as well as the dimensions of the apparatus.

An object of the present invention is to provide a motor control apparatus and on-vehicle motor drive system which can easily protect components of the inverter from the overvoltage even if surplus power occurs in the generator in a system without a battery between the generator and the motor.
(1) In order to attain the above-mentioned purpose, the present invention is used for an electrical machinery system having a motor which is directly driven by the power generated by a generator, the generator being driven by an engine. The present invention comprises an inverter which converts the DC power generated by the above-mentioned generator to AC power; an inverter unit which supplies this AC power produced by the inverter to an AC motor; control means for controlling DC-to-AC conversion by this inverter unit; and/or interruption means for preventing the power generated by the above-mentioned generator from being supplied to the above-mentioned inverter when the above-mentioned inverter stops.
   The above-mentioned configuration makes it possible to easily protect components of the inverter from the overvoltage even when surplus power occurs in the generator.
(2) Preferably in (1) described above, the above-mentioned interruption means comprises overvoltage detection means, which is located between the above-mentioned generator and inverter and detects that the input voltage of the above-mentioned inverter is higher than a predetermined value; and voltage absorption means, which is located on a DC voltage line between the above-mentioned generator and inverter and consumes DC voltage; wherein an overvoltage is consumed by the voltage absorption means when the overvoltage detection means detects the overvoltage.
(3) Preferably in (2) described above, the above-mentioned interruption means further comprises current stop means for stopping field current supply to a field coil of the above-mentioned generator from the above-mentioned control means when the above-mentioned overvoltage detection means detects an overvoltage.
(4) Preferably in (2) described above, the above-mentioned interruption means further uses the above-mentioned overvoltage detection means for detecting that the input voltage of the above-mentioned inverter is lower than a second predetermined value; wherein the above-mentioned interruption means stops overvoltage consumption by the above-mentioned voltage absorption means when the above-mentioned overvoltage detection means detects that the input voltage is lower than the second predetermined value.
(5) Preferably in (2) described above, the above-mentioned interruption means further comprises overcurrent detection means for detecting that the current flowing in the above-mentioned inverter exceeds a predetermined value; and current stop means for stopping field current supply to the field coil of the above-mentioned generator from the above-mentioned control means when the above-mentioned overcurrent detection means detects overcurrent.
(6) Preferably in (1) described above, the above-mentioned interruption means comprises overvoltage detection means, which is located between the above-mentioned generator and inverter and detects that the input voltage of the above-mentioned inverter is higher than a predetermined value; and switching means, which is located on a DC voltage line between the above-mentioned generator and inverter and interrupts power supply to the above-mentioned inverter from the above-mentioned generator.
(7) Preferably in (1) described above, the above-mentioned interruption means comprises overvoltage detection means, which is located between the above-mentioned generator and inverter and detects that the input voltage of the above-mentioned inverter is higher than a predetermined value; switching means for grounding a DC voltage line between the above-mentioned generator and inverter; and a fuse located on the DC voltage line between the above-mentioned generator and inverter; wherein the above-mentioned fuse blows when the above-mentioned switching means grounds the above-mentioned DC voltage line.
(8) Preferably in (1) described above, the above-mentioned interruption means comprises overvoltage detection means, which is located between the above-mentioned generator and inverter and detects that the input voltage of the above-mentioned inverter is higher than a predetermined value; and a thyristor as a rectifier which rectifies the power generated by the above-mentioned generator; wherein the above-mentioned thyristor is turned OFF when the above-mentioned overvoltage detection means detects an overvoltage.
(9) Preferably in (1) described above, the above-mentioned interruption means comprises a voltage suppressor, which is located between the above-mentioned generator and inverter and absorbs the power generated by the above-mentioned generator.
(10) Preferably in (9) described above, the above-mentioned interruption means further comprises overcurrent detection means for detecting that the current flowing in the above-mentioned inverter exceeds a predetermined value; and current stop means for stopping field current supply to the field coil of the above-mentioned generator from the above-mentioned control means when the above-mentioned overcurrent detection means detects overcurrent.
(11) Preferably in (9) described above, the above-mentioned interruption means comprises overvoltage detection means, which is located between the above-mentioned generator and inverter and detects that the input voltage of the above-mentioned inverter is higher than a predetermined value; and current stop means for stopping field current supply to the field coil of the above-mentioned generator from the above-mentioned control means when the above-mentioned overvoltage detection means detects an overvoltage.
(12) In order to attain the above-mentioned purpose, the present invention is used for a vehicle having motor-driven wheels which are different from engine-driven wheels. The present invention comprises a generator driven by an engine to generate power; an inverter unit which comprises an inverter for converting the DC power generated by the above-mentioned generator to AC power, and supplies the AC power to an AC motor; control means for controlling DC-to-AC conversion by this inverter unit; and/or interruption means for preventing the power generated by the above-mentioned generator from being supplied to the above-mentioned inverter when the above-mentioned inverter is stopped.

The above-mentioned configuration makes it possible to easily protect components of the inverter from the overvoltage even when surplus power occurs in the generator.

In accordance with the present invention, components of the inverter can easily be protected from the overvoltage even when surplus power occurs in the generator in a system without a battery between a generator and a motor. The above features can be combined in any way partly or as a whole.

### BRIEF DESCRIPTION OF THE DRAWINGS

Fig. 1 is a block diagram showing the configuration of a generator-motor system using a motor control apparatus according to a first embodiment of the present invention.
Fig. 2 is a graph showing output voltage vs. output current characteristics of a generator controlled by a motor control apparatus according to the first embodiment of the present invention.
Fig. 3 is a graph showing transitions of the output voltage and output current of a generator when an inverter is stopped.
Fig. 4 is a graph showing the voltage of a smoothing capacitor when controlled by a motor control apparatus according to the first embodiment of the present invention.
Fig. 5 is a block diagram showing the configuration of a generator-motor system using a motor control apparatus according to a second embodiment of the present invention.
Fig. 6 is a block diagram showing the configuration of a generator-motor system using a motor control apparatus according to a third embodiment of the present invention.
Fig. 7 is a block diagram showing the configuration of a generator-motor system using a motor control apparatus according to a fourth embodiment of the present invention.
Fig. 8 is a graph showing the operation of a motor control apparatus according to the fourth embodiment of the present invention.
Fig. 9 is a block diagram showing the configuration of a generator-motor system using a motor control apparatus according to a fifth embodiment of the present invention.

### DETAILED DESCRIPTION OF THE PREFERRED EMBODIMENTS

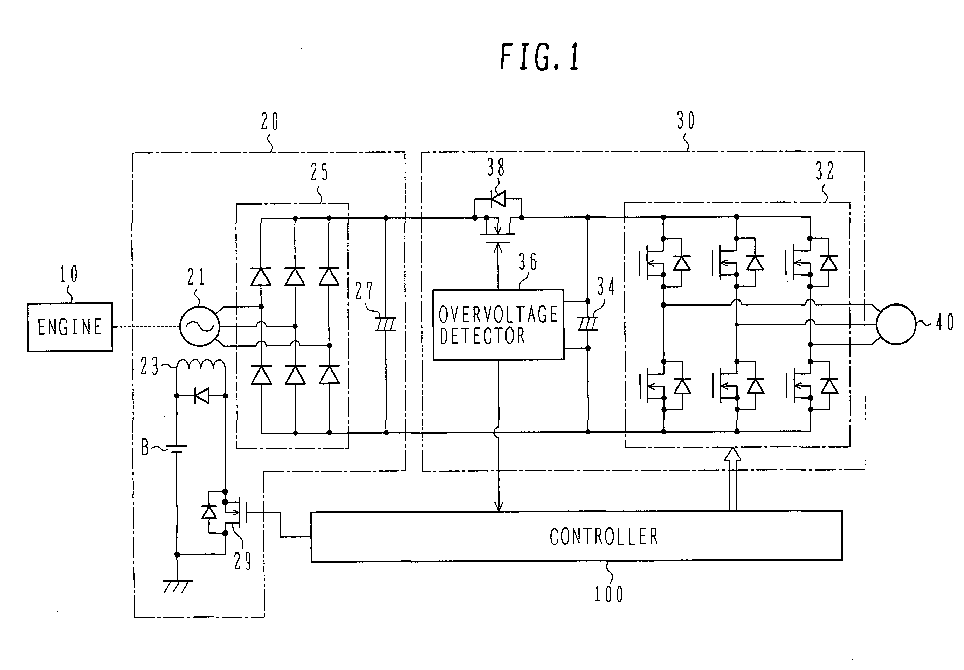

First of all, the configuration and operation of a motor control apparatus according to a first embodiment of the present invention will be described with reference to Figs. 1 to 4.

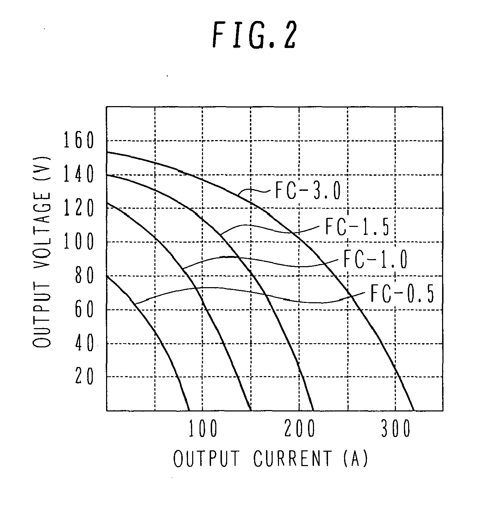

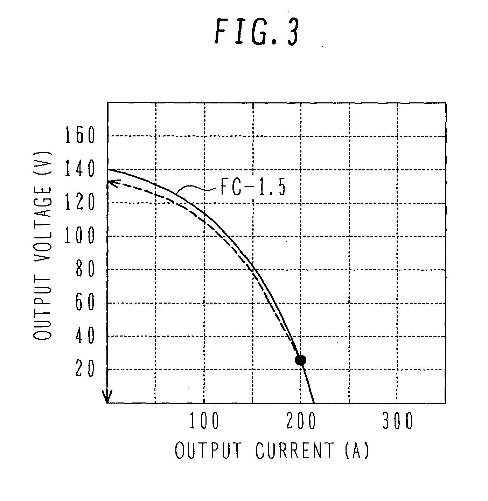

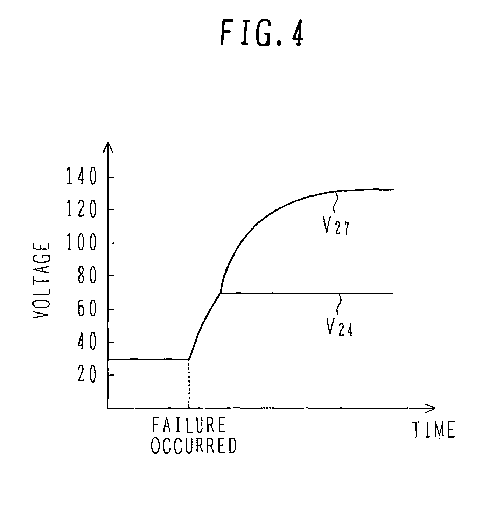

Fig. 1 is a block diagram showing the configuration of a generator-motor system using a motor control apparatus according to a first embodiment of the present invention. Fig. 2 is a graph showing output voltage vs. output current characteristics of a generator controlled by a motor control apparatus according to the first embodiment of the present invention. Fig. 3 is a graph showing transitions of the output voltage and output current of a generator when an inverter is stopped. The horizontal axes of Figs. 2 and 3 indicate the output current and the vertical axes indicate the output voltage. Fig. 4 is a graph showing the voltage of a smoothing capacitor when controlled by a motor control apparatus according to the first embodiment of the present invention.

A generator-motor system shown in Fig. 1 comprises a power generation unit 20 including a generator 21 driven by an engine 10, a motor control apparatus consisting of an inverter unit 30 and a controller 100, and a motor 40. A motor drive system comprises the motor control apparatus including the inverter unit 30 and the controller 100, and the motor 40. The configuration of this generator-motor system is such that the power generated by the generator is directly supplied to the motor without using a storage device, such as a battery for storing the power generated by the generator.

The power generation unit 20 includes the generator 21, a field coil 23, a rectifier 25, a smoothing capacitor 27, and a semiconductor switch 29. The generator 21 is driven by the engine 10 and outputs three-phase AC power. The field coil 23 is wounded around the rotator of the generator 21. A field current is supplied to the field coil 23 from a DC power supply B, such as a battery. A current supplied from the DC power supply B can be varied by performing ON/OFF control (PWM control) of the semiconductor switch 29 through the controller 100, allowing variable output voltage of the generator 21. Separate excitation using the external DC power supply B is shown as an excitation system. To obtain an output voltage higher than the voltage of the DC power supply B, self excitation can be used with which the output of the generator 21 is used as a power supply of the field current.

The rectifier 25 forms a full-wave rectification circuit, which includes three diode pairs connected in parallel, each consisting of two diodes connected in series, to perform full-wave rectification of the three-phase AC power output of the generator 21. A ripple voltage contained in the output of the rectifier 25 is smoothed by the smoothing capacitor 27. The DC power output by the power generation unit 20 is supplied to the inverter unit 30.

The inverter unit 30 includes an inverter 32, a smoothing capacitor 34, an overvoltage detector 36, and a semiconductor switch 38. In the case of the inverter 32, an upper arm and a lower arm are formed by two MOS-FETs connected in series; three pairs of the upper and lower arms connected in parallel form switching elements respectively for phase U, phase V, and phase W. A gate control signal is supplied to gate terminals of the six MOS-FETs from the controller 100, and ON/OFF control of this signal is performed. The inverter 32 converts the DC power supplied from the power generation unit 10 into three-phase AC power and then supplies it to the stator coil of the motor 40 as a motor current. It is also possible to use an IGBT as a switching element which forms the inverter 32.

The smoothing capacitor 34 smoothes a surge voltage produced by switching operation of the inverter 32. The operation of the overvoltage detector 36 will be later mentioned. The end-to-end voltage of the smoothing capacitor 34 is compared with a reference voltage. If the end-to-end voltage of the smoothing capacitor 34 is higher than the reference voltage, the overvoltage detector 36 outputs a control signal which turns OFF the semiconductor switch 38. The semiconductor switch 38, which is located on a power supply line connecting the inverter 32 with the power generation unit 20, is normally turned ON. However, if it is turned OFF by the control signal from overvoltage detector 36, power supply to the inverter 32 from the power generation unit 20 is interrupted.

The motor 40 is a synchronous motor driven by AC power.

The controller 100 outputs a PWM signal which performs ON/OFF control of each switching element of the inverter 32. The inverter 32 generates an AC voltage of desired frequency and voltage from the DC voltage supplied from the power generation unit 20, and drives the motor 7.

The output voltage vs. output current characteristics of the generator 21 controlled by a motor control apparatus according to the present embodiment will be described with reference to Fig. 2.

The output voltage vs. output current characteristics of the generator 21 vary depending on the value of the field current flowing in the field coil 23. In Fig. 2, a solid line FC-0.5 shows values which can be taken as the output voltage and output current of the generator 21 when the field current is 0.5A. Likewise, a solid line FC-1.0 shows values which can be taken as the output voltage and the output current of the generator 21 when the field current is 1.0A; a solid line FC-1.5 shows values which can be taken as the output voltage and output current of the generator 21 when the field current is 1.5A; and a solid line FC-3.0 shows values which can be taken as the output voltage and output current of the generator 21 when the field current is 3.0A.

For example, when the field current is 1.5A, values on the solid line FC-1.5 can be taken, for example, an output voltage of 30V with an output current of 200A, an output voltage of 80V with an output current of 150A, etc.

For example, in the case of the generator 21, a DC voltage of 60V or less is normally used. On the contrary, an element with a 100V rated voltage is used as a semiconductor switching element used for the inverter 32, providing a sufficient withstand voltage with respect to 60V DC voltage.

Then, transitions of the output voltage and output current of the generator 21 when the inverter 32 is stopped will be described with reference to Fig. 3.

A solid line in Fig. 3 shows the output voltage and output current when the field current is 1.5A, shown in Fig. 2. Here, for example, assume that the generator 21 supplies 30V-200A power with a field current of 1.5A.

Under this operating condition of the generator 21, if the inverter 32 shown in Fig. 1 stops because of a certain failure, the output voltage rises, reaches the output maximum voltage, and then drops to 0V, as shown by a trace of a dotted line of the power generation characteristics in Fig. 3. If the inverter 32 stops because of a certain failure, even if the controller 100 turns OFF the semiconductor switch 29 to stop control of the field current, the current flowing into the smoothing capacitor 27 and the smoothing capacitor 34 from the generator 21 raises the DC voltage before the field current attenuates because of a long time constant of the field coil. Therefore, the output voltage changes according to the trace of the dotted line.

As shown in Fig. 3, if the output voltage of the generator 21 rises, the overvoltage detector 36 shown in Fig. 1 detects voltage rise of the smoothing capacitor 34 and turns OFF the semiconductor switch 10. As a result, as shown in Fig. 4, the voltage V27 of the smoothing capacitor 27 rises in the same manner as the transition of the output voltage of the generator 21 shown by the dotted line in Fig. 3. However, since a voltage V34 of the smoothing capacitor 34 is maintained to the voltage obtained when the semiconductor switch 10 is turned OFF, the DC voltage on the inverter side is also maintained to the same voltage. With the example shown, since the reference voltage of the overvoltage detector 36 is set to 65V, the voltage V34 of the smoothing capacitor 34 is maintained to 65V, as shown in Fig. 4. The use of a switching element with a withstand voltage of 100V as a component for the inverter 32 makes it possible to prevent damage to the switching element.

Surplus power occurs in the generator, i.e., the voltage V34 of the smoothing capacitor 34 rises not only when the inverter 32 stops because of a certain failure but also in the following cases. For example, in the case of a motor-driven four-wheel vehicle with front wheels driven by the engine 10 and rear wheels driven by the motor 40, if a front wheel skids, the number of rotations of the engine 10 extremely rises resulting in an increased output voltage of the generator 21. Also in this case, the overvoltage detector 36 operates making it possible to prevent high voltage from being supplied to the inverter 32.

In the above-mentioned example, it would be acceptable that the semiconductor switch 38 shown in Fig. 1 has a withstand voltage of 65V or higher. Therefore, like the switching element of the inverter 32, a semiconductor switch with a withstand voltage of 100V can be used. As a result, it is possible to integrate the inverter 32 with the semiconductor switch 38.

Furthermore, smoothing capacitors are separately arranged as the smoothing capacitor 27 which is located nearer the generator 21 than the semiconductor switch 38, and the smoothing capacitor 34 which is located nearer the inverter 32 than the semiconductor switch 38. Therefore, surge voltages on the sides of the generator and inverter can respectively be absorbed.

In accordance with the present embodiment, if the input voltage of the inverter 32 becomes equal to an overvoltage, the semiconductor switch 38 can be turned OFF to prevent high voltage from being supplied to the inverter 32. Therefore, components of the inverter can easily be protected from the overvoltage even if surplus power occurs in the generator.

Furthermore, it is possible to integrate the inverter 32 with the semiconductor switch 38 by reducing the withstand voltage of the semiconductor switch 38.

Furthermore, since the smoothing capacitors are separately arranged, surge voltages on the sides of the generator and inverter can respectively be absorbed.

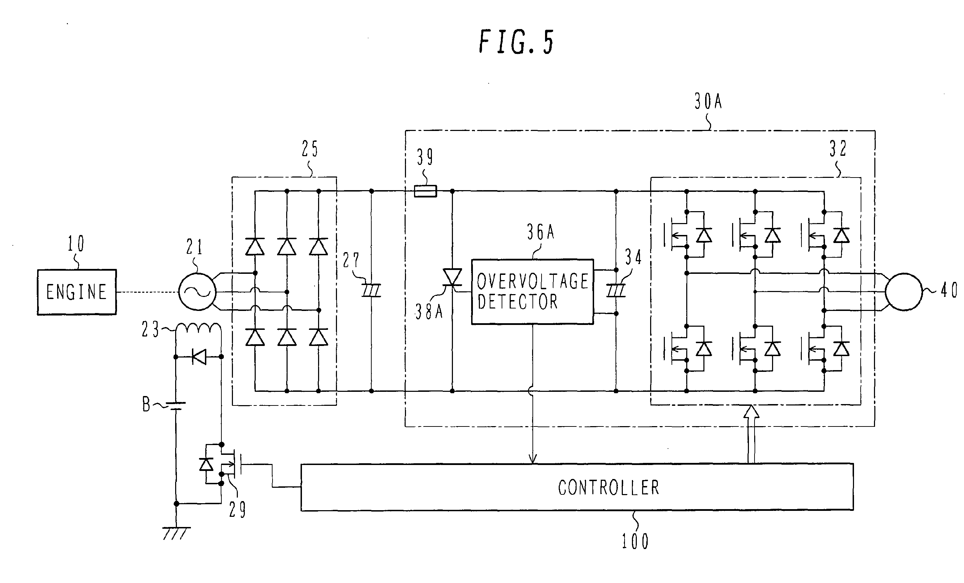

The configuration and operation of a motor control apparatus according to a second embodiment of the present invention will be described with reference to Fig. 5.

Fig. 5 is a block diagram showing the configuration of a generator-motor system using a motor control apparatus according to a second embodiment of the present invention. In Fig. 5, the same numerals indicate the same sections as those of Fig. 1.

In accordance with the present embodiment, the inverter unit 30A includes a semiconductor switch 38A and a fuse 39 instead of the semiconductor switch 38 of Fig. 1. The Semiconductor switch 38A is located between the power supply line connecting the inverter 32 with the power generation unit 20 and the ground line. For the semiconductor switch 38A, a high-voltage type thyristor which can withstand higher voltage and higher current than the semiconductor switch 38 of Fig. 1 is used. The fuse 39 is located on the power supply line connecting the inverter 32 with the power generation unit 20. The overvoltage detector 36A outputs a control signal which turns OFF the semiconductor switch 38A when the end-to-end voltage of the smoothing capacitor 34 is lower than the reference voltage and turns ON the semiconductor switch 38A when the end-to-end voltage of the smoothing capacitor 34 becomes higher than the reference voltage.

In accordance with the present embodiment, if the overvoltage detector 36A detects voltage rise of the smoothing capacitor 34, the semiconductor switch 38A is turned ON to short-circuit the DC voltage outputted by the power generation unit 20, preventing the overvoltage from being supplied to the inverter 32. For this reason, the charges accumulated in the smoothing capacitor 27 are quickly discharged through the fuse 39 and then the fuse 39 blows, making it possible to prevent the voltage of the generator 21 from being applied to the inverter.

In accordance with the present embodiment, the semiconductor switch 38A is used instead of the semiconductor switch 38 shown in Fig. 1, making it possible to avoid a problem of heat development in the semiconductor switch 38 of Fig. 1.

Furthermore, smoothing capacitors are separately arranged as the smoothing capacitor 27 which is located nearer the generator 21 than the semiconductor switch 38, and the smoothing capacitor 34 which is located nearer the inverter 32 than the semiconductor switch 38. Therefore, surge voltages on the sides of the generator and inverter can respectively be absorbed.

In accordance with the present embodiment, if the input voltage of the inverter 32 becomes equal to the overvoltage, the semiconductor switch 38A can be turned ON to prevent high voltage from being supplied to the inverter 32. Therefore, components of the inverter can easily be protected from the overvoltage even if surplus power occurs in the generator.

Furthermore, the semiconductor switch 38A can avoid a problem of heat development.

Furthermore, since the smoothing capacitors are separately arranged, surge voltages on the sides of the generator and inverter can respectively be absorbed.

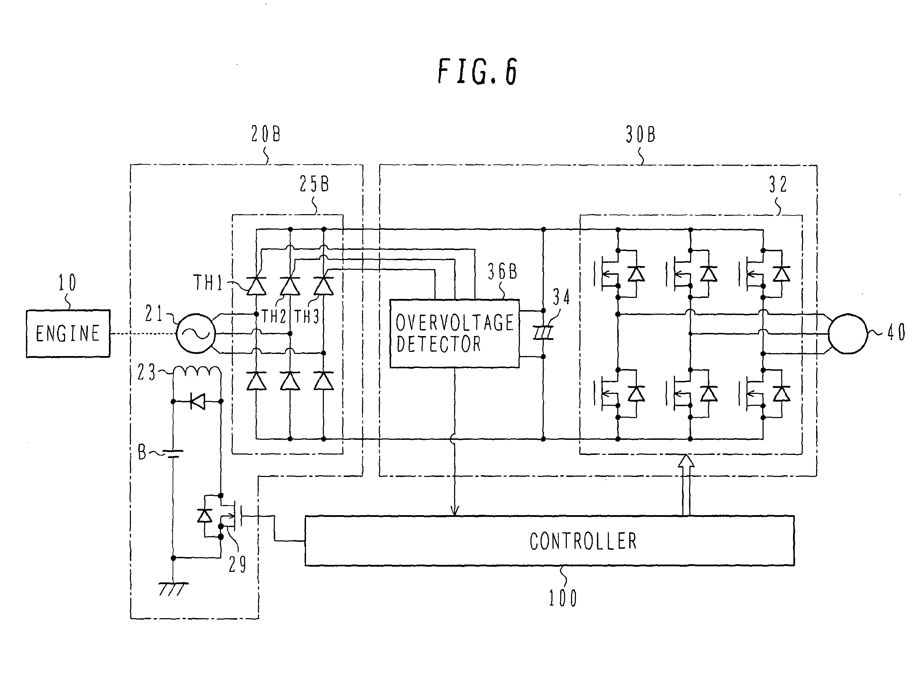

The configuration and operation of a motor control apparatus according to a third embodiment of the present invention will be described with reference to Fig. 6.

Fig. 6 is a block diagram showing the configuration of a generator-motor system using a motor control apparatus according to a third embodiment of the present invention. In Fig. 6, the same numerals indicate the same sections as those of Fig. 1.

In accordance with the present embodiment, a rectifier 25B of the power generation unit 20B uses series circuits of thyristors TH1, TH2, and TH3 and diodes instead of the series circuits of two diodes. The overvoltage detector 36B outputs control signals which stop the gates of the thyristors TH1, TH2, and TH3 if the end-to-end voltage of the smoothing capacitor 34 becomes higher than the reference voltage.

With this configuration, if the overvoltage detector 36A detects voltage rise of the smoothing capacitor 34, the gates of the thyristors TH1, TH2, and TH3 are stopped to interrupt the output voltage of the generator 21, thus preventing the overvoltage from being supplied to the inverter 32.

It would be possible that thyristors are arranged only as lower arms in addition to the case of Fig. 5 in which they are arranged only as upper arms.

Since a thyristor has almost the same size and heat release value as a diode, both devices can easily be replaced with each other.

In accordance with the present embodiment, if the input voltage of the inverter 32 becomes equal to the overvoltage, the output voltage of the generator 21 can be interrupted by stopping the gates of the thyristors TH1, TH2, and TH3, thus preventing the overvoltage from being supplied to the inverter 32. Therefore, even if surplus power occurs in the generator, components of the inverter can easily be protected from the overvoltage.

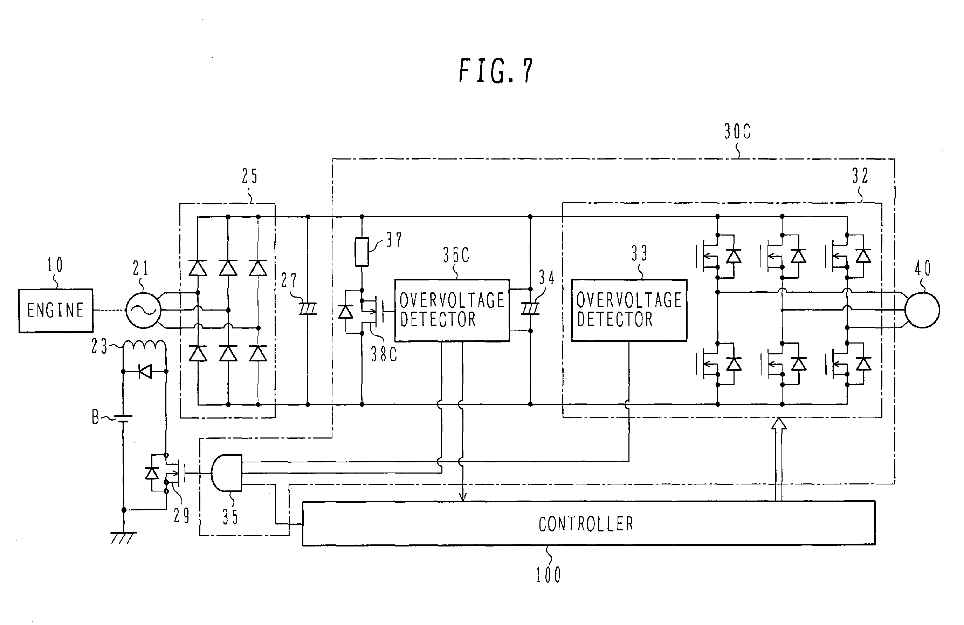

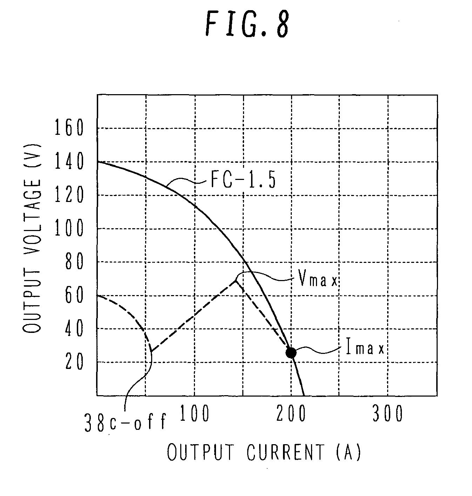

The configuration and operation of a motor control apparatus according to a fourth embodiment of the present invention will be described with reference to Figs. 7 and 8.

Fig. 7 is a block diagram showing the configuration of a generator-motor system using a motor control apparatus according to a fourth embodiment of the present invention. In Fig. 7, the same numerals indicate the same sections as those of Fig. 1. Fig. 8 explains the operation of a motor control apparatus according to a fourth embodiment of the present invention.

In accordance with the present embodiment, the inverter unit 30C includes a series circuit of a semiconductor switch 38C and a resistor 37 instead of the semiconductor switch 38 of Fig. 1. The series circuit of the semiconductor switch 38C and the resistor 37 is located between the power supply line connecting the inverter 32 with the power generation unit 20 and the ground line. The resistance of the resistor 37 is small enough compared with the impedance of the inverter 32. The overvoltage detector 36C outputs a control signal which turns OFF the semiconductor switch 38C if the end-to-end voltage of the smoothing capacitor 34 is lower than the reference voltage and turns ON semiconductor switch 38C if the end-to-end voltage of the smoothing capacitor 34 becomes higher than the reference voltage.

Furthermore, the present embodiment includes a current stopper 35 and an overcurrent detector 33.

In accordance with the present embodiment, if the overvoltage detector 36C detects voltage rise of the smoothing capacitor 34, the semiconductor switch 38C is turned ON. The DC voltage generated by the power generation unit 20 is applied to the resistor 37, absorbed by the resistor 37, and converted to heat, thus preventing the overvoltage from being supplied to the inverter 32.

The time constant of the generator 21 is short, i.e., several tens to several hundreds milliseconds as mentioned above. Therefore, if the resistor 37 has a withstand voltage for current flow of up to 300A for several hundreds milliseconds, the resistor can be used adequately. For example, a 0.5 ohm resistor can be used as the resistor 37. For example, if a coil of an insulating coating copper wire with 0.5mm side is used as the resistor 37, the size of the resistor 37 is about 100mm x 60mm x 20mm which can sufficiently be stored in a storage case of the inverter unit 30C.

Furthermore, the overcurrent detector 33 determines whether an overcurrent flows in the inverter 32. If the overcurrent detector 33 detects an overcurrent flow, it outputs a low-level signal to the current stopper 35. For example, in the case of a motor-driven four-wheel vehicle with front wheels driven by the engine 10 and rear wheels driven by the motor 40, if a rear wheel is locked by a gutter or level difference, the controller 100 commands the inverter 32 to draw a still larger current so as to further increase the output torque of the motor 40. Even if the controller 100 controls the field current flowing in the field coil 23 by outputting a normal PWM signal, the use of an AND circuit as the current stopper 35 makes it possible to set the output of the current stopper 35 to a low level, turn OFF the semiconductor switch 29, and zero the field current.

Furthermore, if the overvoltage detector 36C detects overvoltage, it outputs a low-level signal to the current stopper 35. For example, in the case of a motor-driven four-wheel vehicle with front wheels driven by the engine 10 and rear wheels driven by the motor 40, if a front wheel skids, the number of rotations of the engine 10 extremely rises resulting in an increased output voltage of the generator 21. In this case, the controller 100 controls the field current flowing in the field coil 23 by outputting a normal PWM signal. At this time, the use of an AND circuit as the current stopper 35 makes it possible to set the output of the current stopper 35 to a low level, turn OFF the semiconductor switch 29, and zero the field current.

In accordance with the present embodiment, by directly interrupting the current flowing in the field coil 23 through the current stopper 35 when each individual failure is detected, separately from the control output by the controller 100, it is possible to quickly attenuate the generated power and reduce the power consumption of the resistor 37. Since the overvoltage detector 36C operates after the inverter 21 stops in response to the operation of the overcurrent detector 33 and the voltage of the smoothing capacitor 34 rises, the field current can be interrupted before turning ON the semiconductor switch 38C.

Furthermore, in the case of the overvoltage detector 36C, the power consumption of the resistor 37 can be reduced by turning OFF the semiconductor switch 38C when the voltage of the smoothing capacitor 34 falls below a fixed value.

Specifically, as shown in Fig. 8, if the overcurrent detector 33 detects overcurrent Imax when a rear wheel is locked, etc., the semiconductor switch 29 is turned OFF to zero the field current. If the end-to-end voltage of the smoothing capacitor 34 rises and the overvoltage detector 36C detects overvoltage Vmax (for example, 65V), the semiconductor switch 38C is turned ON to draw a current in the resistor 37 and absorb overvoltage resulting in a voltage drop. If the semiconductor switch 38C is turned OFF when the voltage of the smoothing capacitor 34 is 30V or less, the voltage rises again without reaching the overvoltage detection level, making it possible to omit discharges from 30V to 0V by the resistor 37. Therefore, the heat release value of the resistor 37 can be reduced.

In accordance with the present embodiment, if the input voltage of the inverter 32 becomes equal to the overvoltage, the semiconductor switch 38C is turned ON to absorb the output voltage of the generator 21 using the resistor 37, thus preventing high voltage from being supplied to the inverter 32. Therefore, even if surplus power occurs in the generator, components of the inverter can easily be protected from overvoltage.

Furthermore, the semiconductor switch 38A can avoid a problem of heat development.

Furthermore, if overvoltage or overcurrent is detected in addition to abnormal stop of the inverter, the field current can immediately be zeroed to stop power generation by the generator.

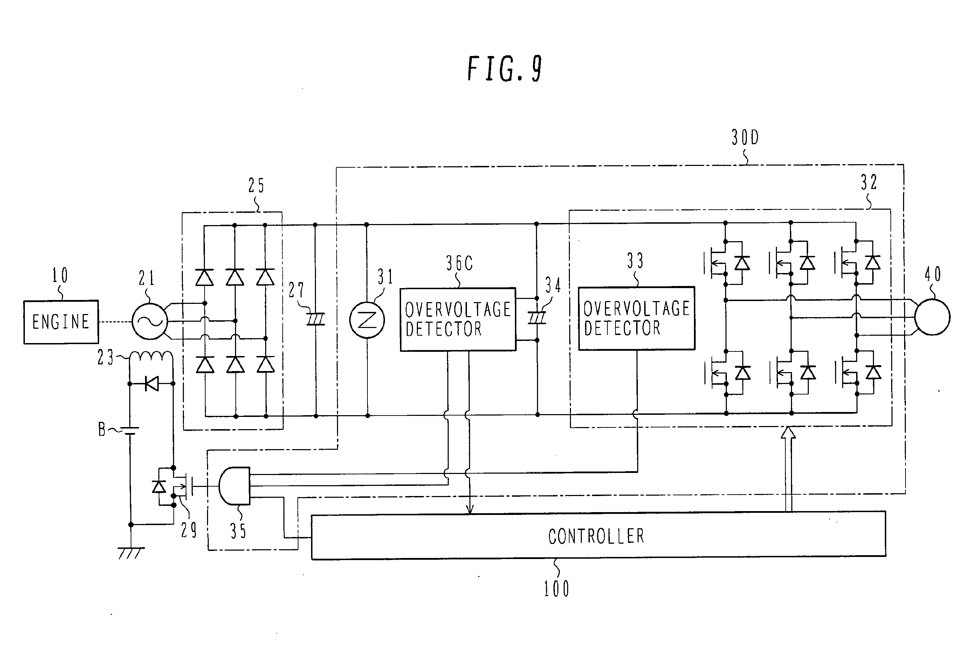

The configuration and operation of a motor control apparatus according to a fifth embodiment of the present invention will be described with reference to Fig. 9.

Fig. 9 is a block diagram showing the configuration of a generator-motor system using a motor control apparatus according to a fifth embodiment of the present invention. In Fig. 9, the same numerals indicate the same sections as those of Fig. 1.

With the present embodiment, the inverter unit 30D includes a voltage suppressor 31 instead of the series circuit of the semiconductor switch 38C and the resistor 37 of Fig. 7. The voltage suppressor 31 is located between the power supply line connecting the inverter 32 with the power generation unit 20 and the ground line. For an application with small output power of the generator 21 and the motor 40, the present embodiment is applied if surge voltage can be absorbed by the voltage suppressor 31.
The above features and embodiments can be combined in any way partly or as a whole.

## Claims

1. A motor control apparatus used for an electrical machinery system having a motor (40) which is directly driven by the power generated by a generator (21), the generator (21) being driven by an engine (10), the motor control apparatus comprising:
an inverter unit (30) which comprises an inverter (32) for converting the DC power generated by the generator (21) to AC power, and supplies the AC power produced by said inverter (32) to an AC motor (40);
control means (100) for controlling DC-to-AC conversion performed by said inverter unit (30); and
interruption means for preventing the power generated by the generator (21) from being supplied to said inverter (32) when said inverter (32) is stopped.

2. The motor control apparatus according to Claim 1, wherein
said interruption means comprises:
overvoltage detection means which is located between the generator (21) and said inverter (32) and detects that the input voltage of said inverter (32) is higher than a predetermined value; and
voltage absorption means which is located on a DC voltage line between the generator (21) and said inverter (32) and consumes a DC voltage; and
wherein
an overvoltage is consumed by said voltage absorption means when said overvoltage detection means detects the overvoltage.

3. The motor control apparatus according to at least one of claims 1 and 2, wherein
said interruption means further comprises:
filed current stop means for stopping field current supply to the field coil of the generator (21) from said control means when said overvoltage detection means detects the overvoltage.

4. The motor control apparatus according to at least one of claims 1 to 3, wherein
said interruption means further uses
said overvoltage detection means for detecting that the input voltage of said inverter (32) is lower than a second predetermined value; and
wherein
said interruption means stops overvoltage consumption by said voltage absorption means when said overvoltage detection means detects that the input voltage is lower than the second predetermined value.

5. The motor control apparatus according to at least one of claims 1 to 4, wherein
said interruption means further comprises:
overcurrent detection means for detecting that the current flowing in said inverter exceeds a predetermined value; and
filed current stop means for stopping field current supply to the field coil of the generator from said control means when said overcurrent detection means detects an overcurrent.

6. The motor control apparatus according to at least one of claims 1 to 5, wherein
said interruption means comprises:
overvoltage detection means which is located between the generator and said inverter (32) and detects that the input voltage of said inverter (32) is higher than a predetermined value; and
switching means which is located on a DC voltage line between the generator (21) and said inverter (32) and interrupts power supply to said inverter (32) from the generator (21).

7. The motor control apparatus according to at least one of claims 1 to 6, wherein
said interruption means comprises:
overvoltage detection means which is located between the generator (21) and said inverter (32) and detects that the input voltage of said inverter (32) is higher than a predetermined value;
switching means for grounding a DC voltage line between the generator (21) and said inverter (32); and
a fuse located on the DC voltage line between the generator (21) and said inverter (32);
wherein
said fuse blows when said switching means grounds the DC voltage line.

8. The motor control apparatus according to at least one of claims 1 to 7, wherein
said interruption means comprises overvoltage detection means which is located between the generator (21) and said inverter (32) and which detects that the input voltage of said inverter (32) is higher than a predetermined value; and
a thyristor as a rectifier which rectifies the power generated by the generator (21);
wherein
said thyristor is turned OFF when said overvoltage detection means detects the overvoltage.

9. The motor control apparatus according to at least one of claims 1 to 8, wherein
said interruption means comprises a voltage suppressor which is located between the generator and said inverter (32) and which absorbs the power generated by the generator (21).

10. The motor control apparatus according to at least one of claims 1 to 9, wherein
said interruption means further comprises:
overcurrent detection means for detecting that the current flowing in said inverter (32) exceeds a predetermined value; and
filed current stop means for stopping field current supply to the field coil of the generator (21) from said control means when said overcurrent detection means detects an overcurrent.

11. The motor control apparatus according to at least one of claims 1 to 10, wherein
said interruption means further comprises:
overvoltage detection means which is located between the generator (21) and said inverter (32) and detects that the input voltage of said inverter (32) is higher than a predetermined value; and
filed current stop means for stopping field current supply to the field coil of the generator (21) from said control means when said overvoltage detection means detects the overvoltage.

12. An on-vehicle motor drive system used for a vehicle having motor-driven wheels which are different from engine-driven wheels, the on-vehicle motor drive system comprising:
a generator (21) which is driven by an engine (10) to generate power;
an inverter unit (30) which comprises an inverter (32) for converting the DC power generated by the generator (21) to AC power, and supplies the AC power produced by said inverter (32) to an AC motor (40);
control means for controlling DC-to-AC conversion performed by said inverter unit (30); and
interruption means for preventing the power generated by the generator (21) from being supplied to said inverter (32) when said inverter (32) is stopped.
